# EUROPÄISCHE PATENTSCHRIFT

(11) **EP 2 039 718 B1**
(45) Veröffentlichungstag und Bekanntmachung des Hinweises auf die Patenterteilung: **17.08.2016**
(21) Anmeldenummer: 08163941.1
(22) Anmeldetag: 09.09.2008
(51) Int. Cl.: C08K 5/00, C08K 5/10, C08K 5/42, C08K 5/103, C08L 27/06

(54) **Schnell gelierende Weichmacherzubereitungen**
Quickly coagulating softener preparations
Préparations de plastifiant à gélification rapide

(30) Priorität: 19.09.2007 DE 102007044689
(43) Veröffentlichungstag der Anmeldung: 25.03.2009
(73) Patentinhaber: LANXESS Deutschland GmbH, 50569 Köln (DE)
(72) Erfinder: Weiß, Thomas, 68549 Ilvesheim (DE); Wiedemeier, Melanie, 41540 Dormagen (DE); Hansel, Jan-Gerd, 51469 Bergisch Gladbach (DE)

(56) Entgegenhaltungen:
- JP-A- 2003 165 884

## Beschreibung

Die Erfindung betrifft schnell gelierende Weichmacherzubereitungen enthaltend wenigstens einen Alkylsulfonsäurearylester der Formel R¹-SO₂-O-R² und wenigstens ein Dioldibenzoat der allgemeinen Formel R³C(O)O-Y-O(O)CR⁴ und/oder wenigstens einen Dicarbonsäuredibenzylester der allgemeinen Formel R³CH₂O(O)C-Z-C(O)OCH₂R⁴ sowie ihre Verwendung als Weichmacher in Kunststoffen und Kunststoffe, die diese Weichmacherzubereitungen enthalten.

Zur Verarbeitung von Kunststoffen wie beispielsweise Polyvinylchlorid werden seit Jahrzehnten Weichmacher eingesetzt. In letzter Zeit steigen die Anforderungen an die Weichmacher im Hinblick auf Leistungsfähigkeit und Unbedenklichkeit gegenüber Mensch und Umwelt. Eine wichtige Forderung betrifft eine möglichst niedrige Lösetemperatur und Gelierzeit. Unter der Lösetemperatur wird im Zusammenhang mit Weichmachern die Temperatur verstanden, bei der aus einer Polyvinylchlorid-Dispersion in einem Weichmacher eine homogene Phase wird (L. Meier: "Weichmacher", in R. Gächter, H. Müller (Ed.): Taschenbuch der Kunststoff additive, 3. Ausgabe, S. 361 - S. 362, Hanser Verlag, München 1990). Weichmacher mit niedriger Gelierzeit ermöglichen eine schnelle und energiesparende Verarbeitung.

In Anwendungen, in denen eine schnelle Gelierung gefordert ist, werden nach dem Stand der Technik überwiegend Alkylbenzylester von aromatischen Polycarbonsäuren, wie beispielsweise das Butylbenzylphthalat, eingesetzt (L. Meier: "Weichmacher", in R. Gächter, H. Müller (Ed.): Taschenbuch der Kunststoffadditive, 3. Ausgabe, S. 397, Hanser Verlag, München 1990).

Neben einer niedrigen Lösetemperatur wird von zeitgemäßen Weichmachern aber auch eine niedrige Flüchtigkeit verlangt. Die Flüchtigkeit von Weichmachern führt zu unerwünschter Versprödung beispielsweise des Weich-Polyvinylchlorids sowie zur Belastung mit sogenannten Flüchtigen Organischen Substanzen (VOC), die in verbrauchernahen Anwendungen vermieden werden soll.

Im Rahmen der in der Europäischen Union gültigen Richtlinie 2005/84/EG für Phthalsäureester wurde empfohlen, die Verwendung von Diisononylphthalat (DINP), Di(isodecyl)phthalat (DIDP) und Di-n-octylphthalat (DNOP) zur Herstellung kleinteiliger Kinderspielzeuge bedingt einzuschränken. Darüber hinaus wird von der Verwendung von Di(2-ethylhexyl)phthalat (DEHP), Butylbenzylphthalat (BBP), und Dibutylphthalat (DBP) bei Konzentrationen größer 0,1 % für Kinderspielzeug vollständig abgesehen. Hersteller von PVC Weichmachern reagierten auf solche Veränderungen der Richtlinien durch Entwicklung phthalatfreier Alternativen, wie beispielsweise Diisononylhexahydrophthalat (Hexamoll® DINCH) der BASF AG. Andere phthalatfreie Weichmacher sind Alkylsulfonsäurearylester (Mesamoll®, Lanxess Deutschland GmbH) oder Ester der Benzoesäure (Benzoflextypen®, Velsicol Chemical Corp.), die erfolgreich eingesetzt werden.

Viele dieser phthalatfreien Alternativen zeigen jedoch suboptimale Eigenschaftsprofile, die entsprechend für eine Verwendung als PVC-Weichmacher verbessert werden können. Für Anwender von Alkylsulfonsäurearylestern ist es von großem Interesse, gezielt das Eigenschaftsprofil zu verändern, ohne die positiven Eigenschaften der Alkylsulfonsäurearylester zu mindern. Dies kann z.B. durch den Einsatz niedrig zu dosierender Zusatzkomponenten erreicht werden.

Die Aufgabe der vorliegenden Erfindung bestand darin, phthalatfreie Weichmacherzubereitungen zu finden, die sich durch niedrigere Flüchtigkeit als die der Einzelkomponenten auszeichnen und zudem geringere Gelierzeiten aufweisen als die Linearbeziehung der Einzelkomponenten erwarten läßt.

Überraschend wurde nun gefunden, dass phthalatfreie Weichmacherzubereitungen eines Gemisches aus wenigstens einem Alkylsulfonsäurearylester und wenigstens einem Ester der Benzoesäure mit mehrwertigen Alkoholen, aber auch Weichmacherzubereitungen eines Gemisches aus wenigstens einem Alkylsulfonsäurearylester und Benzylestern mehrwertiger aliphatischer Carbonsäuren, wie Dibenzyladipat, solche Eigenschaften zeigen.

Gegenstand dieser Erfindung sind deshalb phthalatfreie Weichmacherzubereitungen enthaltend
a) 1 - 98 Gew.-% wenigstens eines Alkylsulfonsäurearylesters der Formel R¹-SO₂-O-R² und
b) 2 - 99 Gew.-% wenigstens eines Dioldibenzoats der allgemeinen Formel R³C(O)O-Y-O(O)CR⁴ oder wenigstens eines Dicarbonsäuredibenzylesters der allgemeinen Formel R³CH₂O(O)C-Z-C(O)OCH₂R⁴ oder Gemische der Formeln R³C(O)O-Y-O(O)CR⁴ und R³CH₂O(O)C-Z-C(O)OCH₂R⁴, wobei die Summe der Gewichtsprozente aller Komponenten der Zubereitung 100 % ergibt und worin
   - R¹: für einen geradkettigen oder verzweigten C₁- bis C₂₀-Alkylrest steht,
   - R²: für einen optional mit C₁- bis C₄-Alkyl oder Halogen substituierten Phenylrest steht,
   - Y: für einen optional Ethergruppen enthaltenden Alkylenrest mit mindestens 2C-Atomen, bevorzugt für einen optional bis zu fünf Ethergruppen enthaltenden C₂- bis C₁₀-Alkylrest, steht,
   - R³, R⁴: jeweils unabhängig voneinander für einen optional mit C₁- bis C₄-Alkyl oder Halogen substituierten Phenylrest stehen und
   - Z: für einen gesättigten oder ungesättigten, geradkettigen oder verzweigten, cyclischen oder polycyclischen C₂- bis C₁₀-Kohlenwasserstoffrest steht, wobei die Summe der Gewichtsprozente aller Komponenten in der Weichmacherzubereitung 100 % ergibt.

Zur Klarstellung sei angemerkt, dass vom Rahmen der Erfindung alle nachfolgenden aufgeführten, allgemeinen oder in Vorzugsbereichen genannten Definitionen und Parameter in beliebigen Kombinationen umfasst sind.

In einer bevorzugten Ausführungsform der vorliegenden Erfindung steht der Rest R¹ für einen C₁₀-C₂₀-Alkylrest.

In einer weiteren bevorzugten Ausführungsform der vorliegenden Erfindung leitet sich der Rest Z strukturell von der Bernsteinsäure, Glutarsäure, Adipinsäure, Pimelinsäure, Suberinsäure, Azelainsäure oder Sebazinsäure ab. Dabei steht Z für die Alkyleneinheiten zwischen den Carboxylresten.

In einer besonders bevorzugten Ausführungsform der Erfindung handelt es sich bei dem Ester der Struktur R³C(O)O-Y-O(O)CR⁴ um Diethylenglycoldibenzoat, Triethylenglycoldibenzoat, Dipropylenglycol-dibenzoat, Tripropylenglycoldibenzoat.

In einer weiteren besonders bevorzugten Ausführungsform der Erfindung handelt es sich bei dem Ester der Struktur R³CH₂O(O)C-Z-C(O)OCH₂R⁴ um Dibenzyladipat.

In einer bevorzugten Weichmacherzubereitung liegt der Gehalt der Komponente a) Alkylsulfonsäurearylester zwischen 70 - 98 Gew.%, ganz besonders bevorzugt bei 80-98 Gew.% Alkylsulfonsäurearylester.

Die erfindungsgemäßen Weichmacherzubereitungen lassen sich durch Mischen der an sich bekannten Alkylsulfonsäurearylester der Komponente a) im angegebenen Verhältnis mit den Komponenten b) herstellen.

Die Mischungen aus den Komponenten a) und b) können durch ihre physikalischen Eigenschaften charakterisiert werden. Dazu kann die Lösetemperatur für PVC, die Viskosität, Flüchtigkeit und die Gelierzeit für PVC-Plastisole herangezogen werden. In den Experimentalbeispielen werden die Methoden zur Bestimmung der Eigenschaften erläutert.

Die Erfindung umfasst auch die Verwendung der erfindungsgemäßen Weichmacherzubereitungen in Kunststoffen, bevorzugt Polyvinylchlorid, Vinylchlorid-basierte Copolymere, Polyvinylidenchlorid, Polyvinylacetale, Polyacrylate, Polyamide, Polyurethane, Polylactide, Polymilchsäuren, Cellulose und seine Derivate, Kautschukpolymere wie Acrylnitril-Butadien-Kautschuk, hydrierter Acrylnitril-Butadien-Kautschuk, Chloroprenkautschuk, chloriertes Polyethylen, Chlorsulfonylpolyethylen, Ethylen-Propylen-Kautschuk, Acrylatkautschuk und/oder Epichlorhydrinkautschuk. Bevorzugt ist Polyvinylchlorid.

Die Erfindung betrifft aber auch Kunststoffe, bevorzugt Polyvinylchlorid, Vinylchlorid-basierte Copolymere, Polyvinylidenchlorid, Polyvinylacetale, Polyacrylate, Polyamide, Polyurethane, Polylactide, Polymilchsäuren, Cellulose und seine Derivate, Kautschukpolymere wie Acrylnitril-Butadien-Kautschuk, hydrierter Acrylnitril-Butadien-Kautschuk, Chloroprenkautschuk, chloriertes Polyethylen, Chlorsulfonylpolyethylen, Ethylen-Propylen-Kautschuk, Acrylatkautschuk und/oder Epichlorhydrinkautschuk, bevorzugt Polyvinylchlorid, dadurch gekennzeichnet, dass diese die schnell gelierenden, phthalatfreien Weichmacherzubereitungen enthalten.

Das erfindungsgemäß bevorzugte Polyvinylchlorid wird dabei vorzugsweise durch Homopolymerisation aus Vinylchlorid nach dem Fachmann bekannten Methoden wie der Suspensions-, der Emulsions- oder der Massepolymerisation hergestellt. Die erfindungsgemäßen Weichmacherzubereitungen werden vorzugsweise in Gemischen mit 20 bis 99 Gew.% Kunststoff, bevorzugt 45 bis 95 Gew.% Kunststoff, besonders bevorzugt 50 bis 90 Gew.% Kunststoff eingesetzt. Im Falle des erfindungsgemäß bevorzugten Polyvinylchlorids werden diese Gemische Weich-Polyvinylchlorid genannt.

Die mittels der erfindungsgemäßen Weichmacherzubereitung ausgestatteten Kunststoffe, so auch das erfindungsgemäß bevorzugte Polyvinylchlorid, können neben den erfindungsgemäßen Weichmacherzubereitungen auch noch andere, geeignete Zusatzstoffe enthalten. In einer bevorzugten Ausführungsform können als Zusatzstoffe Stabilisatoren, Gleitmittel, Füllstoffe, Pigmente, Flammschutzmittel, Lichtstabilisatoren, Treibmittel, polymere Verarbeitungeshilfsmittel, Schlagzähverbesserer, optische Aufheller, Antistatika oder Biostabilisatoren enthalten sein.

Im Folgenden werden einige geeignete Zusatzstoffe näher beschrieben. Die aufgeführten Beispiele stellen jedoch keine Einschränkung der erfindungsgemäßen Gemische dar, sondern dienen lediglich der Erläuterung.

Die in einer bevorzugten Ausführungsform zusätzlich zu den Komponenten a) und b) einzusetzenden Stabilisatoren c) neutralisieren die während und/oder nach der Verarbeitung des Kunststoffs/Polyvinylchlorids abgespaltene Säuren, insbesondere Salzsäure. Als Stabilisatoren kommen alle üblichen Kunststoff/Polyvinylchlorid-Stabilisatoren in fester oder flüssiger Form in Betracht, besonders bevorzugt übliche Epoxy/Zink-, Ca/Zn-, Ba/Zn-, Pb- oder Sn-Stabilisatoren sowie auch säurebindende Schichtsilikate, bevorzugt Hydrotalcit. In den erfindungsgemäßen Kunststoffen können neben der erfindungsgemäßen Weichmacherzubereitung 0,05 bis 7 Gew. %, bevorzugt 0,1 bis 5 Gew.%, besonders bevorzugt von 0,2 bis 4 Gew.% und insbesondere von 0,5 bis 3 Gew.% Stabilisatoren eingesetzt werden.

Die in einer weiteren bzw. alternativen bevorzugten Ausführungsform zusätzlich zu den Komponenten a) und b) und gegebenenfalls c) oder alternativ zu c) einzusetzenden Gleitmittel d) sollen zwischen den Kunststoff/Polyvinylchlorid-Partikeln wirksam werden und Reibungskräften beim Mischen, Plastifizieren und Verformen entgegenwirken. Als Gleitmittel d) können die erfindungsgemässen Weichmacherzubereitungen enthaltenden Kunststoffe alle für die Verarbeitung von Kunststoffen üblichen Gleitmittel enthalten. Bevorzugt kommen in Betracht Kohlenwasserstoffe, wie Öle, Paraffine und Polyethylen-Wachse, Fettalkohole mit 6 bis 20 C-Atomen, Ketone, Carbonsäuren, wie Fettsäuren und Montansäuren, oxidiertes Polyethylen-Wachs, Metallsalze von Carbonsäuren, Carbonsäureamide sowie Carbonsäureester, beispielsweise mit den Alkoholen Ethanol, Fettalkoholen, Glycerin, Ethandiol, Pentaerythrit und langkettige Carbonsäuren als Säurekomponente. Die erfindungsgemäß einzusetzenden Gleitmittel d) können mit einem Gehalt von 0,01 bis 10 Gew.%, bevorzugt 0,05 bis 5 Gew.%, besonders bevorzugt von 0,1 bis 3 Gew.% und insbesondere von 0,2 bis 2 Gew.% neben der erfindungsgemäßen Weichmacherzubereitung im Kunststoff eingesetzt werden.

Die in einer weiteren bzw. alternativen bevorzugten Ausführungsform zusätzlich zu den Komponenten a), b) und gegebenenfalls c) und/oder d) oder anstelle von c) oder d) einzusetzenden Füllstoffe e) beeinflussen vor allem die Druck-, Zug- und Biegefestigkeit sowie die Härte und Wärmeformbeständigkeit von weichgemachtem Kunststoff bzw. von weichgemachtem Polyvinylchlorid oder Polyvinylbromid in positiver Weise. Im Rahmen der Erfindung können die Gemische als Füllstoffe e) bevorzugt Ruß und/oder andere anorganische Füllstoffe, bevorzugt natürliche Calciumcarbonate, besonders bevorzugt Kreide, Kalkstein oder Marmor, synthetische Calciumcarbonate, Dolomit, Silikate, Kieselsäure, Sand, Diatomeenerde, Aluminiumsilikate, bevorzugt Kaolin, Glimmer und Feldspat enthalten. Insbesondere bevorzugt werden als Füllstoffe Calciumcarbonate, Kreide, Dolomit, Kaolin, Silikate, Talkum oder Ruß eingesetzt. Die erfindungsgemäßen Kunststoffe können neben der erfindungsgemäßen Weichmacherzubereitung die Füllstoffe e) zu 0,01 bis 80 Gew.%, bevorzugt zu 0,1 bis 60 Gew.%, besonders bevorzugt von 0,5 bis 50 Gew.% und insbesondere zu 1 bis 40 Gew.% enthalten.

Die in einer weiteren bzw. alternativen bevorzugten Ausführungsform zusätzlich zu den Komponenten a), b) und gegebenenfalls c), d) und/oder e) oder anstelle von c), d) oder e) einzusetzenden Pigmente f) dienen dazu, das erhaltene Kunststoffprodukt an unterschiedliche Einsatzmöglichkeiten anzupassen. Im Rahmen der vorliegenden Erfindung können sowohl anorganische Pigmente als auch organische Pigmente als Komponente f) eingesetzt werden. Als anorganische Pigmente werden bevorzugt Cadmium-Pigmente, insbesondere CdS, Kobalt-Pigmente, insbesondere CoO/Al₂O₃, Chrom-Pigmente, insbesondere Cr₂O₃, verwendet. Als organische Pigmente werden bevorzugt Monoazopigmente, kondensierte Azopigmente, Azomethinpigmente, Anthrachinonpigmente, Chinacridone, Phthalocyaninpigmente, Dioxazinpigmente oder Anilinpigmente eingesetzt. Die erfindungsgemäß einzusetzenden Pigmente f) können mit einem Gehalt von 0,01 bis 10 Gew.%, bevorzugt 0,05 bis 5 Gew.%, besonders bevorzugt von 0,1 bis 3 Gew.% und insbesondere von 0,5 bis 2 Gew.% neben der Weichmacherzubereitung in dem daraus herzustellenden Kunststoff eingesetzt werden.

Die in einer weiteren bzw. alternativen bevorzugten Ausführungsform zusätzlich zu den Komponenten a), b) und gegebenenfalls c), d), e) und/oder f) oder anstelle von c), d), e) oder f) einzusetzenden Flammschutzmittel g) dienen dazu die Entflammbarkeit der aus den Kunststoffen und den Weichmacherkomponenten herzustellenden Substrate zu vermindern und die Rauchentwicklung beim Verbrennen zu verringern. Als Flammschutzmittel werden bevorzugt Antimontrioxid, Phosphatester, Chlorparaffin, Aluminiumhydroxid, Bor-verbindungen, Molybdäntrioxid, Ferrocen, Calciumcarbonat oder Magnesiumcarbonat eingesetzt. Die erfindungsgemäß einzusetzenden Flammschutzmittel g) können mit einem Gehalt von 0,01 bis 30 Gew.%, bevorzugt 0,1 bis 25 Gew.%, besonders bevorzugt von 0,2 bis 20 Gew.% und insbesondere von 0,5 bis 15 Gew.% in dem die erfindungsgemäße Weichmacherzubereitung enthaltenden Kunststoff eingesetzt werden.

Die in einer weiteren bzw. alternativen bevorzugten Ausführungsform zusätzlich zu den Komponenten a), b) und gegebenenfalls c), d), e), f) und/oder g) oder anstelle von c), d), e), f) oder g) einzusetzenden Lichtstabilisatoren h) dienen dazu, daraus herzustellende Kunststoffartikel vor einer Schädigung im Oberflächenbereich durch den Einfluss von Licht zu schützen. Bevorzugt werden als Lichtstabilisatoren Hydroxybenzophenone oder Hydroxyphenylbenzotriazole eingesetzt, die wiederum mit einem Gehalt von 0,01 bis 7 Gew.%, bevorzugt 0,1 bis 5 Gew.%, besonders bevorzugt von 0,2 bis 4 Gew.% und insbesondere von 0,5 bis 3 Gew.% bezogen auf die gesamte Zusammensetzung des Kunststoffartikels eingesetzt werden.

Alle % Angaben in dieser Anmeldung sind Gew.-% sofern nichts anderes angegeben ist.

Die in einer weiteren bzw. alternativen bevorzugten Ausführungsform zusätzlich zu den Komponenten a), b) und gegebenenfalls c), d), e), f), g) und/oder h) oder anstelle von c), d), e), f), g) oder h) einzusetzenden weiteren Weichmacher i) sind bevorzugt Monoalkylester der Benzoesäure, Benzoesäurediester von Mono-, Di-, Tri- oder Polyalkylenglycolen, Dialkylester aliphatischen Disäuren, Dialkylester aromatischer Disäuren, Trialkylester aromatischer Trisäuren, Phenylester von Alkansulfonsäuren, Alkyl- oder Arylester der Phosphorsäure, Polyester aus Dicarbonsäuren sowie Mischungen davon. Besonders bevorzugte neben der erfindungsgemäßen Weichmacherzubereitung in Kunststoffen einzusetzende weitere Weichmacher i) sind
- die Monoalkylester der Benzoesäure, wie zum Beispiel Isononylbenzoat,
- die Dialkylester aliphatischer Disäuren, wie zum Beispiel Di-(2-ethylhexyl)-adipat, Diisononyladipat, Di-(2-ethylhexyl)-sebazat, Di-(2-ethylhexyl)-azelat, Diisononylcyclohexan-1,2-dicarboxylat,
- die Trialkylester aromatischer Trisäuren, wie zum Beispiel Trioctyltrimellitat,
- die Alkyl- oder Arylester der Phosphorsäure, wie zum Beispiel Tri-(2-ethylhexyl)-phosphat, Diphenyl-2-ethylhexyl-phosphat, Diphenylkresylphosphat oder Trikresylphosphat,
- Polyester, die zum Beispiel aus Dicarbonsäuren wie Adipinsäure oder Phthalsäure und Diolen wie 1,2-Propandiol, 1,3-Butandiol, 1,4-Butandiol oder 1,6-Hexandiol hergestellt werden können,
- Alkylcarboxylate des Glycerins.

Im Rahmen der Erfindung können die erfindungsgemäßen Weichmacherzubereitungen auch in Kunststoffgemischen eingesetzt werden, die weitere Kunststoffe ausgewählt aus der Gruppe bestehend aus Homo- und Copolymeren auf Basis von Ethylen, Propylen, Butadien, Vinylacetat, Glycidylacrylat, Glycidyl-methacrylat, Acrylaten und Methacrylaten mit Alkoholkomponenten von verzweigten oder unverzweigten C₁-C₁₀-Alkoholen, Styrol oder Acrylnitril enthalten. Bevorzugt sind Polyacrylate mit gleichen oder verschiedenen Alkoholresten aus der Gruppe der C₄- bis C₈-Alkohole, besonders des Butanols, Hexanols, Octanols und 2-Ethylhexanols, Polymethylmethacrylat, Methylmethacrylat-Butylacrylat-Copolymere, Methylmethacrylat-Butylmethacrylat-Copolymere, EthylenVinylacetat-Copolymere, chloriertes Polyethylen, Nitrilkautschuk, Acrylnitril-Butadien-StyrolCopolymere, Ethylen-Propylen-Copolymere, Ethylen-Propylen-Dien-Copolymere, Styrol-Acrylnitril-Copolymere, Acrylnitril-Butadien-Rubber, Styrol-Butadien-Elastomere oder Methylmethacrylat-Styrol-Butadien-Copolymere.

Die mit den erfindungsgemäßen Weichmacherzubereitungen hergestellten Kunststoffe können zur Herstellung von beispielsweise Rohrleitungen, Kabeln, Draht-Ummantelungen, im Innenausbau, im Fahrzeug- und Möbelbau, in Bodenbelägen, medizinischen Artikeln, Lebensmittelverpackungen, Dichtungen, Folien, Verbundfolien, Folien für Verbundsicherheitsglas, insbesondere für den Fahrzeug-Bereich und den Architektur-Sektor, Kunstleder, Spielzeug, Verpackungsbehälter, Klebebandfolien, Bekleidung, Beschichtungen, sowie Fasern für Gewebe eingesetzt werden.

Die erfindungsgemäßen Weichmacherzubereitungen sind wegen ihrer sehr niedrigen Lösetemperaturen gut verarbeitbar und weisen eine geringe Flüchtigkeit auf.

Die erfindungsgemäßen Weichmacherzubereitungen und das Verfahren dieser Erfindung werden durch die nachfolgenden, den Erfindungsbereich nicht einschränkenden Beispiele erläutert. [Angaben in Gewichtsprozenten].

### Bestimmung der Lösetemperatur

Zur Bestimmung der Lösetemperatur wurden auf einem beheizbaren Objektträger in einem Tropfen des zu prüfenden Weichmachers einige Körnchen Polyvinylchlorid, Typ Vinnol^{®} H70, Korngröße < 315 µm verrührt. Die Suspension wurde solange aufgeheizt, bis eine Temperatur erreicht war, bei der das Polyvinylchlorid gelöst und transparent erschien. Dieser Vorgang wurde durch ein Mikroskop (Novex, AP-8, 40 fache Vergrößerung, Elektronisches Okular für Mikroskope 640x480: PC-Okular "MikrOkular II") aufgezeichnet und zeitlich erfasst. Aus einer Zeit-Temperatureichkurve wurde auf die Lösetemperatur geschlossen. Aufheizrate: T = -0,0938t² + 7,2068t + 31,684 mit t [min], T [°C]; Temperatureichkurve: T₂ = 0,9772 T₁ - 0,994; T₁ = abgelesene Temperatur, T₂ = wahre Temperatur aus Schmelzpunktsbestimmungen von Eichsubstanzen. Die Methode orientiert sich an einer Beschreibung von Bigg, D.C.H in J. Appl. Polym. Chem. 1975, 19, 1487.

### Bestimmung der Flüchtigkeit

Als Maß für die Flüchtigkeit wurde die Menge an verdampfbaren Bestandteilen durch Bestimmung der Massendifferenz bestimmt. Dabei werden 10 g des Weichmachers in ein thermostatiertes, zylindrisches Gefäß gegeben (Vakuumtrockenschrank, 10 g Weichmacher Al-Schale Durchmesser 10 x Höhe 2,5cm; T = 130 °C; t = 6 h; P = 60 mbar). Die Flüchtigkeit wurde als Durchschnitt einer Doppelbestimmung ermittelt. Als Referenzsubstanz wurde Butylbenzylphthalat mit erfasst.

### Bestimmung der Gelierzeit

Die Gelierzeit wurde aus zeitabhängigen Viskositätsmessungen ermittelt. Dabei wurde die Scherviskosität eines Plastisols (Vermahlung: 100 Gew% Vestolit^{®} B 7021 (PVC) mit 60 Gew% Weichmacher und 3 Gew% Irgastab^{®} CZ 11 (Stabilisator) für 2 min; Entlüftung 10 min; Reifung, 24 h; Viskositätsmessung) mittels eines Platte-Platte-Rotationsviskosimeter der Firma Physica (Gerät: MC 120; Meßsystem: MP 31 [50 mm]) bei 70 °C gemessen. Um vergleichbare Aussagen zur Gelierzeit zu erhalten, wurde die Zeit bis zum Erreichen von 1.000.000 mPas erfasst. Kurze Zeiten indizieren eine hohe Geliergeschwindigkeit.

### Bestimmung der Viskosität

Die Viskosität wurde mit einem Rotationsviskosimeter der Fima Haake, Viscotester 2 plus, gemessen. Der Rotationskörper wurden dabei in die Weichmachermischung bei 23 °C eingeführt und die Messung gestartet. Im Fall von schmelzenden Festkörpern wird die Viskosität bei Schmelztemperatur angegeben.

### Beispiele

Mischung aus Mesamoll® (C₁₂-C₂₀-Alkylsulfonsäurephenylester) mit Diethylenglycoldibenzoat (Bezugsquelle: Aldrich, Gehalt 98%).

| **Beispiel** | **1*** | **2** | **3** | **4*** |
|---|---|---|---|---|
| | Mischungsanteile [Gew%] | | | |
| DEG-dibenzoat [Gew%] | 0 | 10 | 20 | 100 |
| Mesamoll [Gew%] | 100 | 90 | 80 | 0 |
| | Eigenschaften | | | |
| Lösetemperatur [°C] | 113 | 111 | 117 | 124 |
| Viskosität [mPas] bei 25°C | 125 | 97 | 92 | 86 |
| Flüchtigkeit [Gew%] | 2,4 | 0,5 | 0,6 | 2,0 |
| Gelierzeit bis 1.000.000 mPas [min] | 8,7 | 4,3 | 3,3 | 1,0 |

| | | | | |
|---|---|---|---|---|
| *: nicht erfindungsgemäß | | | | |

Mischung aus Mesamoll® (C₁₂-C₂₀-Alkylsulfonsäurephenylester) mit Dibenzyladipat, Gehalt 97%).

| **Beispiel** | **1*** | **5** | **6** | **7*** |
|---|---|---|---|---|
| | Mischungsanteile [Gew%] | | | |
| Dibenzyladipat [Gew%] | 0 | 10 | 20 | 100 |
| Mesamoll [Gew%] | 100 | 90 | 80 | 0 |
| | Eigenschaften | | | |
| Lösetemperatur [°C] | 113 | 116 | 117 | 148 |
| Viskosität [mPas] bei 25°C | 125 | 82 | 59 | 26(40°C) |
| Flüchtigkeit [Gew%] | 2,4 | 0,7 | 0,6 | 1,8 |
| Gelierzeit bis 1.000.000 mPas [min] | 8,7 | 3,5 | 3,0 | 1,3 |

| | | | | |
|---|---|---|---|---|
| *: nicht erfindungsgemäß | | | | |

Aus den Beispielen geht hervor, dass die Flüchtigkeit der erfindungsgemäßen Weichmacherzubereitungen überraschend niedriger ist als die der Einsatzstoffe. Gleichzeitig kann bei einer geringen Zugabe 20 % von Diethylenglycoldibenzoat bzw. Dibenzyladipat in Alkylsulfonsäurephenylesterzubereitungen eine Verkürzung der Gelierzeit um das 2,6 bzw. 2,9 fache erreicht werden. Dabei sinkt die Viskosität und vereinfacht dadurch die Verarbeitbarkeit ohne dass sich die Lösetemperatur der Zubereitung wesentlich erhöht.

## Patentansprüche

1. Phthalatfreie Weichmacherzubereitungen enthaltend
a) 70 - 98 Gew.-% wenigstens eines Alkylsulfonsäurearylesters der Formel R¹-SO₂-O-R² und
b) 2 - 30 Gew.-% wenigstens eines Dioldibenzoats der allgemeinen Formel R³C(O)O-Y-O(O)CR⁴ oder wenigstens eines Dicarbonsäuredibenzylesters der allgemeinen Formel R³CH₂O(O)C-Z-C(O)OCH₂R⁴ oder Gemische der Formeln R³C(O)O-Y-O(O)CR⁴ und R³CH₂O(O)C-Z-C(O)OCH₂R⁴, wobei die Summe der Gewichtsprozente aller Komponenten der Zubereitung 100 % ergibt und worin
R¹ für einen geradkettigen oder verzweigten C₁- bis C₂₀-Alkylrest steht,
R² für einen optional mit C₁- bis C₄-Alkyl oder Halogen substituierten Phenylrest steht,
Y für einen optional Ethergruppen enthaltenden Alkylenrest mit mindestens 2 C-Atomen, bevorzugt für einen optional bis zu fünf Ethergruppen enthaltenden C₂- bis C₁₀-Alkylrest, steht,
R³, R⁴ jeweils unabhängig voneinander für einen optional mit C₁- bis C₄-Alkyl oder Halogen substituierten Phenylrest stehen und
Z für einen gesättigten oder ungesättigten, geradkettigen oder verzweigten, cyclischen oder polycyclischen C₂- bis C₁₀-Kohlenwasserstoffrest steht, wobei die Summe der Gewichtsprozente aller Komponenten in der Weichmacherzubereitung 100 % ergibt.

2. Kunststoffe, **dadurch gekennzeichnet, dass** diese eine phthalatfreie Weichmacherzubereitung gemäß Anspruch 1 enthalten.

3. Phthalatfreie Weichmacherzubereitungen und diese enthaltende Kunststoffe gemäß der Ansprüche 1 oder 2, **dadurch gekennzeichnet, dass** der Rest R¹ für einen C₁₀-C₂₀-Alkylrest steht.

4. Phthalatfreie Weichmacherzubereitungen und diese enthaltende Kunststoffe gemäß einem der Ansprüche 1 bis 3, **dadurch gekennzeichnet, dass** es sich bei dem Ester der Struktur R³C(O)O-Y-O(O)CR⁴ um Diethylenglycoldibenzoat, Triethylenglycoldibenzoat, Dipropylenglycol-dibenzoat, Tripropylenglycoldibenzoat handelt.

5. Phthalatfreie Weichmacherzubereitungen und diese enthaltende Kunststoffe gemäß einem der Ansprüche 1 bis 4, **dadurch gekennzeichnet, dass** es sich bei dem Ester der Struktur R³CH₂O(O)C-Z-C(O)OCH₂R⁴ um Dibenzyladipat handelt.

6. Phthalatfreie Weichmacherzubereitungen und diese enthaltende Kunststoffe gemäß einem der Ansprüche 1 bis 5, **dadurch gekennzeichnet, dass** der Gehalt der Komponente a) Alkylsulfonsäurearylester bei 80-98 Gew.% liegt.

7. Phthalatfreie Weichmacherzubereitungen und diese enthaltende Kunststoffe gemäß einem der Ansprüche 1 bis 6, **dadurch gekennzeichnet, dass** der Rest Z von der Bernsteinsäure, Glutarsäure, Adipinsäure, Pimelinsäure, Suberinsäure, Azelainsäure oder Sebazinsäure abgeleitet ist.

8. Kunststoffe gemäß der Ansprüche 2 bis 7, **dadurch gekennzeichnet, dass** diese zusätzlich zu den Komponenten a) und b) Zusatzstoffe der Reihe Stabilisatoren, Gleitmittel, Füllstoffe, Pigmente, Flammschutzmittel, Lichtstabilisatoren, Treibmittel, polymere Verarbeitungshilfsmittel, Schlagzähverbesserer, optische Aufheller, Antistatika und/oder Biostabilisatoren sowie Mischungen davon enthalten.

9. Kunststoffe gemäß Anspruch 2 bis 8, **dadurch gekennzeichnet, dass** diese zusätzlich weitere Weichmacher der Reihe Monoalkylester der Benzoesäure, Dialkylester aliphatische Disäuren, Dialkylester aromatischer Disäuren, Trialkylester aromatischer Trisäuren, Phenylester von Alkansulfonsäuren, Alkyl- oder Arylester der Phosphorsäure, Polyester aus Dicarbonsäuren sowie Mischungen davon enthalten.

10. Kunststoffe gemäß der Ansprüche 2 bis 9, **dadurch gekennzeichnet , dass** es sich dabei um Polyvinylchlorid, Vinylchlorid-basierte Copolymere, Polyvinylidenchlorid, Polyvinylacetale, Polyacrylate, Polyamide, Polyurethane, Polylactide, Polymilchsäuren, Cellulose und seine Derivate, Kautschukpolymere, besonders bevorzugt Acrylnitril-Butadien-Kautschuk, hydrierter Acrylnitril-Butadien-Kautschuk, Chloroprenkautschuk, chloriertes Polyethylen, Chlorsulfonylpolyethylen, Ethylen-Propylen-Kautschuk, Acrylatkautschuk oder Epichlorhydrinkautschuk handelt.

11. Verwendung der Kunststoffe nach einem der Ansprüche 2 bis 10 in Rohrleitungen, Kabeln, Draht-Ummantelungen, im Innenausbau, im Fahrzeug- und Möbelbau, in Bodenbelägen, medizinischen Artikeln, Lebensmittelverpackungen, Dichtungen, Folien, Verbundfolien, Folien für Verbundsicherheitsglas, im Fahrzeug-Bereich, im Architektur-Sektor, Kunstleder, Spielzeug, Verpackungsbehältern, Klebebandfolien, Bekleidung, Beschichtungen, sowie Fasern für Gewebe.

## Claims

1. Phthalate-free plasticizer preparations comprising
a) from 70 to 98% by weight of at least one aryl alkylsulfonate of the formula R¹-SO₂₋O-R² and
b) from 2 to 30% by weight of at least one diol dibenzoate of the general formula R³C(O)O-Y-O(O)CR⁴ or of at least one dibenzyl dicarboxylate of the general formula R³CH₂O(O)C-Z-C(O)OCH₂R⁴ or mixtures of the formulae R³C(O)O-Y-O(O)CR⁴ and R³CH₂O(O)C-Z-C(O)OCH₂R⁴, where the total of the percentages by weight of all of the components of the preparation is 100% and in which
R¹ is a straight-chain or branched C₁-C₂₀-alkyl radical,
R² is a phenyl radical optionally substituted with C₁-C₄-alkyl or with halogen,
Y is an alkylene radical optionally containing ether groups and having at least 2 carbon atoms, preferably a C₂-C₁₀-alkyl radical optionally containing up to five ether groups,
each of R³ and R⁴ independently of the other is a phenyl radical optionally substituted with C₁-C₄-alkyl or with halogen, and
Z is a saturated or unsaturated, straight-chain or branched, cyclic or polycyclic C₂-C₁₀-hydrocarbon radical, where the total of the percentages by weight of all of the components in the plasticizer preparation is 100%.

2. Plastics, **characterized in that** these comprise a phthalate-free plasticizer preparation according to Claim 1.

3. Phthalate-free plasticizer preparations and plastics comprising these according to Claim 1 or 2, **characterized in that** the radical R¹ is a C₁₀-C₂₀-alkyl radical.

4. Phthalate-free plasticizer preparations and plastics comprising these according to any of Claims 1 to 3, **characterized in that** the ester of the structure R³C(O)O-Y-O(O)CR⁴ is diethylene glycol dibenzoate, triethylene glycol dibenzoate, dipropylene glycol dibenzoate, or tripropylene glycol dibenzoate.

5. Phthalate-free plasticizer preparations and plastics comprising these according to any of Claims 1 to 4, **characterized in that** the ester of the structure R³CH₂O(O)C-Z-C(O)OCH₂R⁴ is dibenzyl adipate.

6. Phthalate-free plasticizer preparations and plastics comprising these according to any of Claims 1 to 5, **characterized in that** the content of component a) aryl alkylsulfonate is from 80 to 98% by weight.

7. Phthalate-free plasticizer preparations and plastics comprising these according to any of Claims 1 to 6, **characterized in that** the radical Z derives from succinic acid, glutaric acid, adipic acid, pimelic acid, suberic acid, azelaic acid or sebacic acid.

8. Plastics according to Claims 2 to 7, **characterized in that** these comprise, in addition to components a) and b), additives from the group of light stabilizers and other stabilizers, lubricants, fillers, pigments, flame retardants, blowing agents, polymeric processing aids, impact modifiers, optical brighteners, antistatic agents and/or biostabilizers, and mixtures thereof.

9. Plastics according to Claims 2 to 8, **characterized in that** these also comprise further plasticizers from the group of monoalkyl esters of benzoic acid, dialkyl esters of aliphatic diacids, dialkyl esters of aromatic diacids, trialkyl esters of aromatic triacids, phenyl esters of alkanesulfonic acids, alkyl or aryl esters of phosphoric acid, polyesters derived from dicarboxylic acids, and mixtures thereof.

10. Plastics according to Claims 2 to 9, **characterized in that** they are polyvinyl chloride, vinyl-chloride-based copolymers, polyvinylidene chloride, polyvinyl acetals, polyacrylates, polyamides, polyurethanes, polylactides, polylactic acids, cellulose and its derivatives, rubber polymers, particularly preferably acrylonitrile-butadiene rubber, hydrogenated acrylonitrile-butadiene rubber, chloroprene rubber, chlorinated polyethylene, chlorosulfonylpolyethylene, ethylene-propylene rubber, acrylate rubber or epichlorohydrin rubber.

11. Use of the plastics according to any of Claims 2 to 10 in pipelines, cables, wire sheathing, in internal fittings, or in the construction of vehicles or of furniture, or in floorcoverings, medical items, food packaging, gaskets, foils, composite foils, foils for laminated safety glass, in the vehicle sector, in the architectural sector, or in synthetic leather, toys, packaging containers, adhesive-tape foils, apparel, coatings, and fibers for textiles.

## Revendications

1. Préparations plastifiantes sans phtalates, contenant :
a) 70 à 98 % en poids d'au moins un ester arylique d'acide alkylsulfonique de formule R¹-SO₂-O-R² et
b) 2 à 30 % en poids d'au moins un dibenzoate de diol de formule général R³C(O)O-Y-O(O)CR⁴ ou d'au moins un ester dibenzylique d'acide dicarboxylique de formule générale R³CH₂O(O)C-Z-C(O)OCH₂R⁴ ou de mélanges des formules R³C(O)O-Y-O(O)CR⁴ et R³CH₂O(O)C-Z-C(O)OCH₂R⁴, la somme des pourcentages en poids de tous les composants de la préparation étant de 100 %,
R¹ représentant un radical alkyle en C₁ à C₂₀ linéaire ou ramifié,
R² représentant un radical phényle éventuellement substitué avec alkyle en C₁ à C₄ ou halogène,
Y représentant un radical alkylène à au moins 2 atomes C contenant éventuellement des groupes éther, de préférence un radical alkyle en C₂ à C₁₀ contenant éventuellement jusqu'à cinq groupes éther, R³, R⁴ représentant chacun indépendamment l'un de l'autre un radical phényle éventuellement substitué avec alkyle en C₁ à C₄ ou halogène, et
Z représentant un radical hydrocarboné en C₂ à C₁₀ saturé ou insaturé, linéaire ou ramifié, cyclique ou polycyclique, la somme des pourcentages en poids de tous les composants dans la préparation plastifiante étant de 100 %.

2. Plastiques, **caractérisés en ce que** ceux-ci contiennent une préparation plastifiante sans phtalates selon la revendication 1.

3. Préparations plastifiantes sans phtalates et plastiques contenant celles-ci selon les revendications 1 ou 2, **caractérisés en ce que** le radical R¹ représente un radical alkyle en C₁₀-C₂₀.

4. Préparations plastifiantes sans phtalates et plastiques contenant celles-ci selon l'une quelconque des revendications 1 à 3, **caractérisés en ce que** l'ester de structure R³C(O)O-Y-O(O)CR⁴ est le dibenzoate de diéthylène glycol, le dibenzoate de triéthylène glycol, le dibenzoate de dipropylène glycol, le dibenzoate de tripropylène glycol.

5. Préparations plastifiantes sans phtalates et plastiques contenant celles-ci selon l'une quelconque des revendications 1 à 4, **caractérisés en ce que** l'ester de la structure R³CH₂O(O)C-Z-C(O)OCH₂R⁴ est l'adipate de dibenzyle.

6. Préparations plastifiantes sans phtalates et plastiques contenant celles-ci selon l'une quelconque des revendications 1 à 5, **caractérisés en ce que** la teneur du composant a) ester arylique d'acide alkylsulfonique est de 80 à 98 % en poids.

7. Préparations plastifiantes sans phtalates et plastiques contenant celles-ci selon l'une quelconque des revendications 1 à 6, **caractérisés en ce que** le radical Z dérive de l'acide succinique, l'acide glutarique, l'acide adipique, l'acide pimélique, l'acide subérique, l'acide azélaïque ou l'acide sébacique.

8. Plastiques selon les revendications 2 à 7, **caractérisés en ce que** ceux-ci contiennent en plus des composants a) et b) des additifs de la série constituée par les stabilisateurs, les lubrifiants, les charges, les pigments, les agents ignifuges, les photostabilisateurs, les agents gonflants, les adjuvants d'usinage polymères, les agents d'amélioration de la résistance aux impacts, les azurants optiques, les antistatiques et/ou les biostabilisateurs et leurs mélanges.

9. Plastiques selon les revendications 2 à 8, **caractérisés en ce que** ceux-ci contiennent en plus d'autres plastifiants de la série constituée par les esters monoalkyliques de l'acide benzoïque, les esters dialkyliques de diacides aliphatiques, les esters dialkyliques de diacides aromatiques, les esters trialkyliques de triacides aromatiques, les esters phényliques d'acides alcanesulfoniques, les esters alkyliques ou aryliques de l'acide phosphorique, les polyesters d'acides dicarboxyliques et leurs mélanges.

10. Plastiques selon les revendications 2 à 9, **caractérisés en ce qu'**il s'agit de polychlorure de vinyle, de copolymères à base de chlorure de vinyle, de polychlorure de vinylidène, de polyvinylacétals, de polyacrylates, de polyamides, de polyuréthanes, de polylactides, d'acides polylactiques, de cellulose et ses dérivés, de polymères de caoutchouc, de manière particulièrement préférée de caoutchouc d'acrylonitrile-butadiène, de caoutchouc d'acrylonitrile-butadiène hydrogéné, de caoutchouc de chloroprène, de polyéthylène chloré, de chlorosulfonylpolyéthylène, de caoutchouc d'éthylène-propylène, de caoutchouc d'acrylate ou de caoutchouc d'épichlorhydrine.

11. Utilisation des plastiques selon l'une quelconque des revendications 2 à 10 dans des canalisations, des câbles, des enrobages de fils, dans la construction intérieure, dans la construction d'automobiles et de meubles, dans des revêtements de sol, des articles médicaux, des emballages alimentaires, des joints, des films, des films composites, des films pour verre de sécurité composite, dans le domaine automobile, dans le secteur de l'architecture, dans le cuir artificiel, des jouets, des contenants d'emballage, des films pour rubans adhésifs, des vêtements, des revêtements, ainsi que des fibres pour tissus.
